# EUROPEAN PATENT SPECIFICATION

(11) **EP 2 248 960 B1**
(45) Date of publication and mention of the grant of the patent: **23.01.2013**
(21) Application number: 09382062.9
(22) Date of filing: 04.05.2009
(51) Int. Cl.: E04F 13/00, G09F 15/00, F16B 5/06

(54) **A device for tensioning an element, for instance a plastic sheet or a textile material, a panel with such a device and an assembly method**
Vorrichtung zum Spannen eines Elements, insbesondere einer Kunststofffolie oder eines Textilmaterials, Paneel mit einer solchen Vorrichtung und Montageverfahren
Dispositif de mise en tension d'un élément, en particulier une feuille plastique ou un matériau textile, panneau avec un tel dispositif et procédé d'assemblage

(43) Date of publication of application: 10.11.2010
(73) Proprietor: IASO, S.A., 25194 Lleida (ES)
(72) Inventor: Reitsma, Feike, 25194 Lleida (ES)
(74) Representative: Hernández Hernández, Carlos

(56) References cited:
- EP-A- 0 495 688
- WO-A-2006/041722
- WO-A-2006/063991
- DE-A1- 3 136 897
- DE-U1- 29 707 701
- GB-A- 1 393 851
- US-A- 3 950 869
- US-A- 5 758 922
- US-A1- 2005 139 334

## Description

### OBJECT OF THE INVENTION

The object of this invention is a tensioning device which can be used for tensioning, for example, plastic sheets, textile materials and those that can be tensioned on a support structure so that the laminar element is left free of wrinkles or undulations.

Another object of this invention is a panel which comprises said tensioning device and the assembly method thereof.

The device object of the invention comprises at least a profile intended to support the element to be tensioned and a tensioning element intended to be joined to the end area of the element to be tensioned. The tensioning element, in its operative position, is disposed joined to one of the faces of the support profile in a pivoting manner so that by means of the pivoting thereof the element to be tensioned changes between a non-tensioned position and a tensioned position wherein the element to be tensioned pulls from the end of the element to be tensioned in order to achieve the tensioning thereof.

### BACKGROUND OF THE INVENTION

European patent application EP1825080 is cited, relating to elements which configure means of tensioning a textile panel as well as the production method of the aforementioned panel. Said application belongs to the state of the art of the present invention although there are large differences between the tensioning device object of the invention and that disclosed in European patent application EP1825080.

European patent application EP1825080 discloses a tensioning device which comprises an elastic band which is situated all around the edges of the element to be tensioned, i.e., the textile sheet, the elastic band intended to be inserted by its other end in a housing of the support profile of the panel, causing the tensioning of the sheet.

In EP0495688 A1 it is disclosed a display panel using a flexible information support, comprising a carrying structure, at least one frame firmly fixed to this structure and comprising edges consisting of assembled segments, the information support, and the fixing and tensioning means of the information support.

In the patent DE3136897 it is disclosed a vehicle with at least one tarpaulin or similar membrane and detachable fastening members.

In DE29707701U1 it is disclosed a flexible-material fixing and tightening equipment which has front frame with portion securing material and hinging through right angle.

In the state of the art it is known a tonneau cover for covering an area of a vehicle bounded by upright walls of the vehicle in which a flexible cover sheet is attached to a frame rail mounted to the vehicle by the use of a pivot lever as the one disclosed in US5758922 A.

In US3950869 A it is disclosed a device for stretching or sizing canvas or like fabrics has a frame with detachable side and end portions.

### DESCRIPTION OF THE INVENTION

The object of the invention is a tensioning device. The element to be tensioned can be, for example, a filiform or laminate element of a textile or plastic material.

The tensioning operation can have certain drawbacks due to the search for a final result without wrinkles or uneven surfaces which can make the result look ugly, in addition to being necessary to apply a great tension in order to achieve the abovementioned objective and the tensioning can even be come undone after prolonged use of the product.

The present invention resolves the previous technical problems by means of a device which features a simple and effective configuration which permits the maintenance of the tensioned element over the course of time.

The tensioning device object of the invention is defined in claim 1. It comprises at least:
- a support profile of the element to be tensioned. Therefore, the free end of the element to be tensioned would remain in operative position, supported on the aforementioned profile.
- A tensioning element which is devised on the one hand to be joined to the end of the element to be tensioned, and which will therefore be that which performs the operation which permits the tensioning of said element. On the other hand, it is also intended to be joined to one of the faces of the support profile in a pivoting manner.

This pivoting movement permits the tensioning element to change between a non-tensioned position and a tensioned position thereof and vice versa.

In its operative position, the tensioning element is situated so that an increase in the distance between the joining of the element to be tensioned and of the tensioning element is produced, i.e., where the element to be tensioned is joined to the tensioning element and the corresponding point to the intersection between the face of the support profile corresponding to the pivoting joint and the support face of the element to be tensioned on the support profile.

In this way, as the aforementioned distance is increased by means of the referred to pivoting movement of the tensioning element an increase in the tension of the element to be tensioned is produced. Therefore, the tensioning device object of the invention permits the tensioning operation to be carried out by means of a simple movement.

This device is applicable, for example, in the construction of panels which comprises a structure of support profiles and a laminar material such as those described above which are joined to said structure and which also comprise the tensioning device object of the invention for the tensioning of the laminar material. Also object of the present invention is the panel thus described and the assembly method thereof.

This type of panels can be used for the coating of façades which in addition to providing a characteristic visual appearance has other uses such as that of contributing to the insulation of the façade of the building as there is a separation between the façade and the laminar elements of the panel.

### DESCRIPTION OF THE DRAWINGS

The present specification is complemented with a set of illustrative and non-limitative drawings of the preferred example of the invention.
Figure 1 shows an example of an embodiment of the device object of the invention wherein the tensioning element, the support profile and the element to be tensioned in slackened position are included.
Figure 2 shows the same example of embodiment corresponding to figure 1 wherein the device is in tensioned position.
Figure 3 shows an example of embodiment corresponding to a panel which comprises the device object of the invention.
Figure 4 shows a cross-section of the example of embodiment corresponding to figure 3 in tensioned position.
Figure 5 shows an example of embodiment of the end area of the element to be tensioned.

### DETAILED EXPOSITION OF THE INVENTION

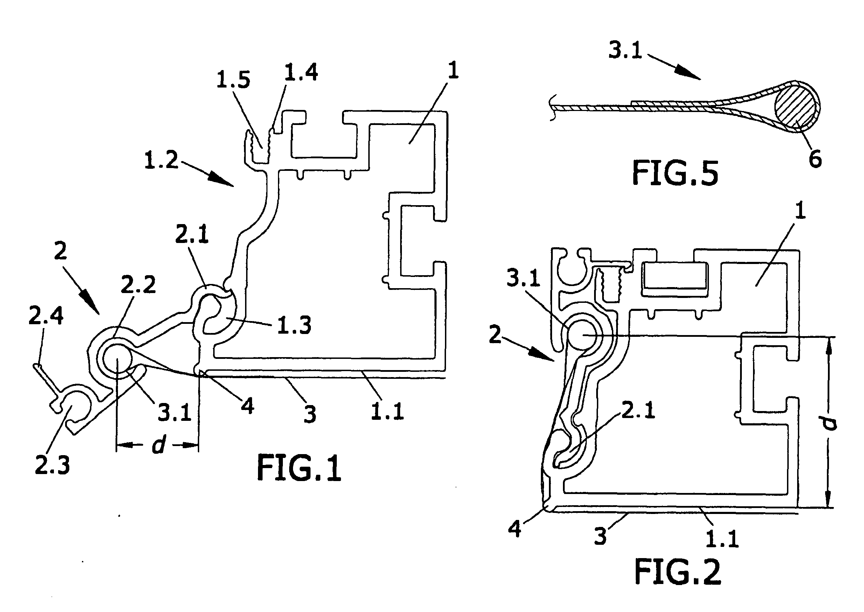

Figure 1 represents an example of embodiment of the device o the object of the invention. It represents a support profile (2) and a tensioning element (2) whereto is joined the end area (3.1) of an element to be tensioned (3) which could be, for example, a laminar material of textile type. Figure 2 represents the same example of embodiment of the device wherein the element to be tensioned (3) is already in tensioned position.

The element to be tensioned (3) is disposed parallel to the face (1.1) of the support profile (1). Although the element to be tensioned (3) could be supported on the aforementioned face (1.1), this comprises a bulge (4) situated at the end thereof (1.1) whereon it truly rests.

The pivoting joint between the tensioning element (2) and the corresponding face (1.2) of the support profile (1) has its axis of rotation displaced from the intersection of the face (1.2) of the profile corresponding to the pivoting joint and the face (1.1) whereto the element to be tensioned (3) is disposed in parallel.

Also represented in both figures is the distance (d) corresponding to the distance between the fastening point between the end area (3.1) of the element to be tensioned (3) on the tensioning element (2) and the point corresponding to the intersection (4) between the face (1.2) of the profile (1) corresponding to the pivoting joint and the face (1.1) of the support profile (1) of the element to be tensioned (3).

In the embodiment shown, the pivoting joint between the tensioning element (2) and the support profile (1) is made by the tensioning element (2) comprising an end (2) devised to remain inserted in a cavity (1.3) of the support profile (1).

The tensioning element (2) also comprises a first cavity (2.2) for the insertion of the end area (3.1) of the element to be tensioned (3). Said end (3.1) comprises a rigid element (6) which is antagonistic to the cavity (2.2) whereon the element to be tensioned (3) is wrapped. This rigid element could be for example a metal bar inserted in the whole end of the end of the element to be tensioned (3). The end of the fabric is represented in figure 5, wherein it is observed that it is folded and joined by any method, for example, by means of sewing or thermo fusion forming a through hole for the insertion of for example a rigid bar.

The device object of the invention shown in the preferred embodiment also comprises grasping means which can be connected to a mechanical traction device of the tensioning element (2). These grasping means comprise a second cavity (2.3) of the tensioning element (2) which permits the insertion of a rigid element which would be connected to the aforementioned mechanical traction system. This is due to the fact that the force that must be applied is so high that it is possible for it to be necessary to have motorized assistance to perform the rotation of the tensioning element (2) as it might be impossible to carry out the operation manually.

The device also comprises means which permit the fastening thereof in the tensioning position. To do this, the tensioning element (2) comprises a projection (2.4) combined with a protrusion (1.4) from the support profile (1) making a fastening by clipping. The support profile (1) further comprises means (1.5) for the insertion of a screw through the projection (2.4) which ensures the joint.

In the embodiment shown in the figures, the tensioning element (2) and the corresponding face (1.2) of the support profile (1) have antagonistic shapes and their faces come into contact in the tensioning position. This contact is made so that the faces in contact form a sharp angle with the element to be tensioned (3) as this helps to maintain the tensioning position.

The tensioning element (2) additionally comprises a shape such that in tensioning position the element to be tensioned (3) covers it (2) observed from the exterior.

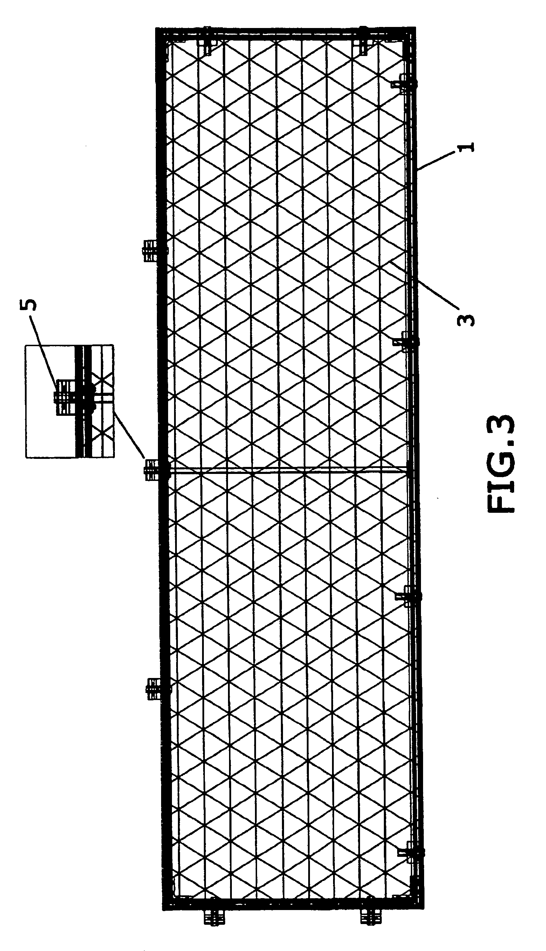

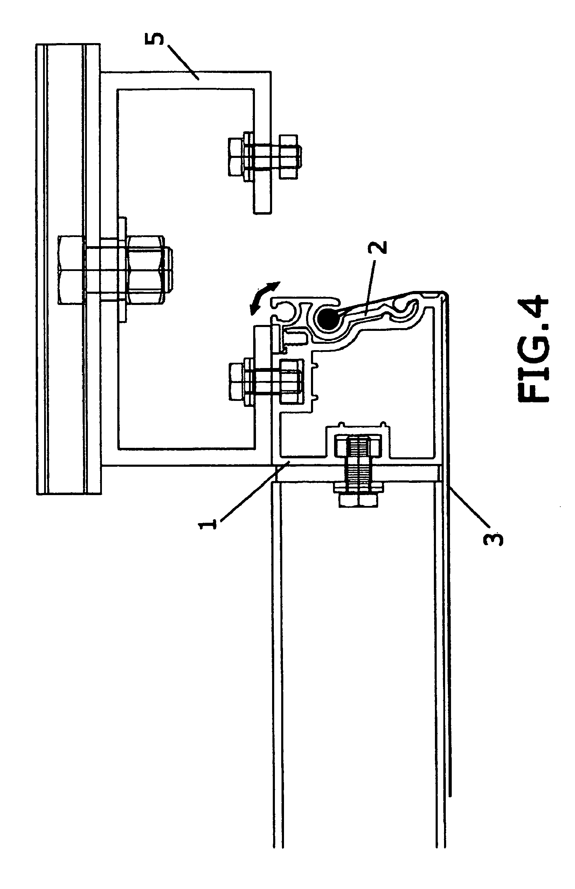

In figures 3 and 4 an example of embodiment is shown of a panel which comprises the previously mentioned tensioning device. The element to be tensioned (3) comprises a sheet of material which extends between at least both support profiles (1) comprising a tensioning device of the type previously described on at least one of the profiles (1).

Figure 3 represents the case wherein the panel comprises four support profiles (1) in the shape of a frame whereon the laminar element to be tensioned (3) is extended. Each one of the profiles (1) can comprises a tensioning device.

The panel can also comprise anchoring means (5) to a wall, which in the example shown in the embodiment, see figure 4, are disposed joined to the support profile (1).

The assembly of the tensioning device comprises the following steps:
- The end area (3.1) of the element to be tensioned (3) and the support profile (1) are put into contact.
- The end area (3.1) of the element to be tensioned (3) is joined to the tensioning profile (2).
- The tensioning profile (2) and the support profile (1) are joined by a pivot.
- The tensioning profile (2) pivots towards the tensioning position.
- The position of the tensioning profile (2) is fixed once tensioned.

In the case of a panel according to that described the laminar element to be tensioned (3) is extended on a surface and a frame constituted by the support profiles (1) is situated thereon. In the event that all of the support profiles (1) have tensioning devices, those situated on opposing support profiles (1) must be pivoted at the same time.

## Claims

1. Device for tensioning an element (3), which comprises at least:
• a support profile (1) of the element to be tensioned (3)
• a tensioning element (2) which is intended to be joined to an end (3.1) of the element to be tensioned (3),
wherein the tensioning (2) element is devised to be joined in pivoting manner to one of the faces (1.2) of the support profile (1) so that it is capable of changing by means of its pivoting between a non-tensioning position of the element to be tensioned (3) and a tensioned position thereof (3) so that it produces, with respect to the non-tensioned position, an increase in the distance (d) between the joint (3.1) of the end of the element to be tensioned (3) and of the tensioning element (2) and the point (4) corresponding to the intersection between the face (1.2) of the support profile (1) corresponding to the pivoting joint and the support face (1.1) of the element to be tensioned, wherein the tensioning element (2) a first cavity (2.2) for the insertion o f the end (3.1) of the element to be tensioned (3) which comprises a rigid element (6) antagonistic to the cavity (2.2) whereon the end of the element to be tensioned (3) is wrapped,
**characterized in that**:
the tensioning element (2) is provided with grasping means which comprise a second cavity (2.3) which permits the insertion of a rigid element of a mechanical traction device; and
wherein, for fasteening the device in the tensioning position the tensioning element (2) comprises a projection (2,4) adapted to be combined with a protrusion (1.4) from the support profile (1) to make a fastening by clipping and the support profile (1) further comprises means (1.5) for the insertion of a screw through the projection (2.4) to fix it in the clipped position.

2. Tensioning device according to claim 1, **characterized in that** the axis of rotation of the pivoting joint is disposed displaced from the intersection between the face (1.2) of the profile corresponding to the pivoting joint and the face (1.1) whereto the element to be tensioned (3) is disposed in parallel.

3. Tensioning device according to any of the previous claims, **characterized in that** the tensioning element (2) comprises an end (2.1) intended to remain inserted in a cavity (1.3) of the support profile to make up the pivoting joint.

4. Panel which comprises the tensioning device of any of the previous claims, **characterized in that** the element to be tensioned (3) comprises a sheet of material which extends between at least both support profiles (1), the device of the previous claims comprising at least one of the support profiles (1).

5. Panel according to claim 4 **characterized in that** it comprises four support profiles (1).

6. Panel according to claims 4 or 5 **characterized in that** each support profile (1) comprises a tensioning device.

7. Assembly method for the tensioning device according to any of the previous claims 1 to 3 which comprises the following steps:
• The end area of the element to be tensioned (3) and the support profile (1) are put into contact.
• The end area of the element to be tensioned (3) is joined to the tensioning profile (2),
• The tensioning profile (2) and the support profile (1) are joined by a pivot.
• The tensioning profile (2) pivots towards the tensioning position.
• The position of the tensioning profile (2) is fixed once tensioned.

## Patentansprüche

1. Vorrichtung zum Spannen eines Elements (3), die mindestens umfasst:
• ein Stützprofil (1) des zu spannenden Elements (3),
• ein Spannelement (2), das dazu bestimmt ist, mit einem Ende (3.1) des zu spannenden Elements (3) verbunden zu werden,
wobei das Spannelement (2) dazu konzipiert ist, in schwenkbarer Weise mit einer der Seiten (1.2) des Stützprofils (1) verbunden zu werden, so dass es durch die Schwenkbewegung zwischen einer nicht-gespannten Position des zu spannenden Elements (3) und einer gespannten Position (3) wechseln kann, so dass es, in Bezug auf die nicht-gespannte Position, zu einer Zunahme des Abstandes (d) zwischen dem Gelenk (3.1) am Ende des zu spannenden Elements (3) und des Spannelements (2) und dem Punkt (4) kommt, welcher der Schnittlinie zwischen der Fläche (1.2) des Stützprofils (1) des Schwenkgelenks und der Stützfläche (1.1) des zu spannenden Elements entspricht,
wobei das Spannelement (2) eine erste Vertiefung (2.2) zum Einsetzen des Endes (3.1) des zu spannenden Elements (3) umfasst, welche ein steifes, der Vertiefung (2.2) gegenläufiges Element (6) umfasst, um welches das zu spannende Element (3) gewickelt ist, **dadurch gekennzeichnet, dass**:
das Spannelement (2) mit einer Greifvorrichtung versehen ist, welche eine zweite Vertiefung (2.3) umfasst, die das Einführen eines starren Elements einer mechanischen Zugvorrichtung ermöglicht; wobei das Spannelement (2) zur Befestigung der Vorrichtung in der Spannstellung einen Vorsprung (2.4) umfasst, der zur Kombination mit einem Überstand (1.4) des Stützprofils angepasst ist, um durch Aufklipsen befestigt zu werden, und das Stützprofil (1) umfasst weiterhin eine Vorrichtung (1.5) für das Einführen einer Schraube durch den Vorsprung (2.4), um es in der Klipposition zu fixieren.

2. Spannvorrichtung gemäß Anspruch 1, **dadurch gekennzeichnet, dass** die Drehachse des Schwenkgelenks versetzt von der Schnittlinie zwischen der Fläche (1.2) des Profils des Schwenkgelenks und der Fläche (1.1) angeordnet ist, wozu das zu spannende Element (3) parallel angeordnet ist.

3. Spannvorrichtung gemäß einem der vorhergehenden Ansprüche, **dadurch gekennzeichnet, dass** das Spannelement (2) ein Ende (2.1) umfasst, das in einer Vertiefung (1.3) des Stützprofils bleiben und so das Schwenkgelenk bilden soll.

4. Platte, welche die Spannvorrichtung gemäß einem der vorhergehenden Ansprüche umfasst, **dadurch gekennzeichnet, dass** das zu spannende Element (3) eine Materialschicht umfasst, die sich zwischen mindestens beiden Stützprofilen (1) erstreckt, wobei die Vorrichtung gemäß den vorhergehenden Ansprüchen mindestens eins der Stützprofile (1) umfasst.

5. Platte gemäß Anspruch 4, **dadurch gekennzeichnet, dass** es vier Stützprofile (1) umfasst.

6. Platte gemäß Anspruch 4 oder 5, **dadurch gekennzeichnet, dass** jedes Stützprofil (1) eine Spannvorrichtung umfasst.

7. Montageverfahren für die Spannvorrichtung gemäß einem der vorhergehenden Ansprüche 1 bis 3, welche die folgenden Schritte umfasst:
• Der Endbereich des zu spannenden Elements (3) und das Stützprofil (1) werden in Kontakt gebracht.
• Der Endbereich des zu spannenden Elements (3) ist mit dem Spannprofil (2) verbunden.
• Das Spannprofil (2) und das Stützprofil (1) sind durch ein Gelenk verbunden.
• Das Spannprofil (2) schwenkt in Richtung der Spannstellung.
• Die Position des Spannprofils (2) wird fixiert, sobald die Vorrichtung gespannt ist.

## Revendications

1. Dispositif de mise en tension d'un élément (3), qui comprend au moins :
• un profilé de support (1) de l'élément à mettre en tension (3)
• un élément de mise en tension (2) destiné à être raccordé à une extrémité (3.1) de l'élément à mettre en tension (3),
dans lequel l'élément de mise en tension (2) est conçu pour être raccordé par pivotement à l'une des faces (1.2) du profilé de support (1) de sorte qu'il est capable, par pivotement, de passer d'une position de non-mise en tension de l'élément à mettre en tension (3) à une position de mise en tension (3) de manière à produire, par rapport à la position de non-mise en tension, une augmentation de la distance (d) entre d'une part le raccord (3.1) entre l'extrémité de l'élément à mettre en tension (3) et celle de l'élément de mise en tension (2), et d'autre part le point (4) correspondant à l'intersection entre la face (1.2) du profilé de support (1) correspondant au raccord pivotant et la face de support (1.1) de l'élément à mettre sous tension, dans lequel l'élément de mise en tension (2) comprend une première cavité (2.2) pour insérer l'extrémité (3.1) de l'élément à mettre en tension (3) qui comprend un élément rigide (6) antagoniste de la cavité (2.2) dans laquelle est enveloppée l'extrémité de l'élément à mettre en tension (3), **caractérisée par le fait que** :
l'élément de mise en tension (2) est pourvu de moyens de préhension comprenant une seconde cavité (2.3) permettant l'insertion d'un élément rigide d'un dispositif de traction mécanique; et dans lequel, pour fixer le dispositif en position de mise en tension, l'élément de mise en tension (2) comprend une projection (2.4) destinée à être combinée à une protrusion (1.4) du profilé de support afin de constituer une fixation par emboîtement, et le profilé de support (1) comprend en outre des moyens (1.5) pour l'insertion d'une vis à travers la projection (2.4) afin de fixer l'ensemble en position emboîtée.

2. Dispositif de mise en tension conforme à la revendication 1, **caractérisé par le fait que** l'axe de rotation du raccord pivotant est disposé à l'écart de l'intersection entre la face (1.2) du profilé correspondant au raccord pivotant et la face (1.1) où l'élément à mettre en tension (3) est disposé en parallèle.

3. Dispositif de mise en tension conforme à l'une quelconque des revendications précédentes, **caractérisé par le fait que** l'élément de mise en tension (2) comprend une extrémité (2.1) destinée à rester insérée dans une cavité (1.3) du profilé de support pour constituer le raccord pivotant.

4. Panneau comprenant le dispositif de mise en tension de l'une quelconque des revendications précédentes, **caractérisé par le fait que** l'élément à mettre en tension (3) comprend une feuille de matériau qui s'étend entre au moins deux profilés de support (1), le dispositif des revendications précédentes comprenant au moins l'un des profilés de support (1).

5. Panneau conforme à la revendication 4 **caractérisé par le fait qu'**il comprend quatre profilés de support (1).

6. Panneau conforme aux revendications 4 ou 5 **caractérisé par le fait que** chaque profilé de support (1) comprend un dispositif de mise en tension.

7. Méthode d'assemblage pour le dispositif de mise en tension conformément à l'une quelconque des revendications 1 à 3 précédentes, qui comprend les étapes suivantes :
• La zone d'extrémité de l'élément à mettre en tension (3) et le profilé de support (1) sont mis en contact.
• La zone d'extrémité de l'élément à mettre en tension (3) est raccordée au profilé de mise en tension (2).
• Le profilé de mise en tension (2) et le profilé de support (1) sont raccordés par un pivot.
• Le profilé de mise en tension (2) pivote vers la position de mise en tension.
• La position du profilé de mise en tension (2) est fixée dès la mise en tension.
